# EUROPEAN PATENT APPLICATION

(11) **EP 0 999 620 A2**
(43) Date of publication of application: **10.05.2000**
(21) Application number: 99308799.8
(22) Date of filing: 04.11.1999
(51) Int. Cl.: H01S 3/0941

(54) **Semiconductor laser-excitation, slab-type solid-state laser oscillating device**

(30) Priority: 05.11.1998 JP 32880498
(71) Applicant: FANUC LTD, Minamitsuru-gun, Yamanashi 401-0597 (JP)
(72) Inventor: Karube, Norio, Machida-shi, Tokyo, 194-0002 (JP); Iehisa, Nubuaki, Mishima-shi, Shizuoka, 411-0026 (JP); Naitou, Shinya, Rm. 7-309, FANUC Manshonharimomi, Mitamitsuru-gun, Yamanashi, 401-0511 (JP); Satou, Masao, Rm. 14-308, FANUC Manshonharimomi, Mitamitsuru-gun, Yamanashi, 401-0511 (JP)
(74) Representative: Billington, Lawrence Emlyn

(57) **Abstract**

A semiconductor laser-excited, slab-type solid-state laser oscillating device (1) which ensures high degree of utilization of excitation light and is capable of preventing deterioration in the characteristics of LD devices as excitation source. Groups (3,4) of semiconductor lasers (2) in the form of stacks are arranged on both sides of a slab-type solid-state laser oscillation medium such that the semiconductor lasers in one group alternate with those in the other group with respect to a direction along the longer sides of a flat rectangular section of the laser oscillation medium. Excitation light (10) emitted from the semiconductor lasers of each group impinges on the laser oscillation medium; considerable part of the incident light is used for the excitation of the laser oscillation medium, while part of the incident light transmits through the laser oscillation medium. The light transmitted through the laser oscillation medium (1) does not impinge on other semiconductor lasers (emitting surfaces of the LD devices), whereby deterioration in the characteristics of the semiconductor lasers is prevented. Reflectors may be arranged so that the transmitted light is not wasted.

## Description

The present invention relates to a semiconductor laser-excitation, slab-type solid-state laser oscillating device for use in laser beam machining etc.

A solid-state laser oscillating device in which a solid-state laser oscillation medium such as YAG is arranged in an optical resonator and is subjected to laser excitation by light energy supplied from an excitation source can perform high-output and stable laser oscillation with ease and thus such laser oscillating device is widely used in laser beam machines etc. for performing cutting, welding, etc. of metals and other materials. As the shape of the solid-state laser oscillation medium, slab type and rod type are known.

The solid-state laser of the former type is preferably used because of an advantage that a zigzag optical path repeating total reflection can be formed within the medium. Lamps most conventionally used as the laser excitation source are halogen lamp, xenon lamp, etc., but in recent years semiconductor laser (LD: Laser Diode) is attracting attention. A laser oscillating device using semiconductor lasers as the excitation source is generally called "semiconductor laser-excited, solid-state laser oscillating device." Particularly, where such a laser oscillating device uses a solid-state laser oscillation medium having a slab shape, it is called "semiconductor laser-excited, slab-type solid-state laser oscillating device."

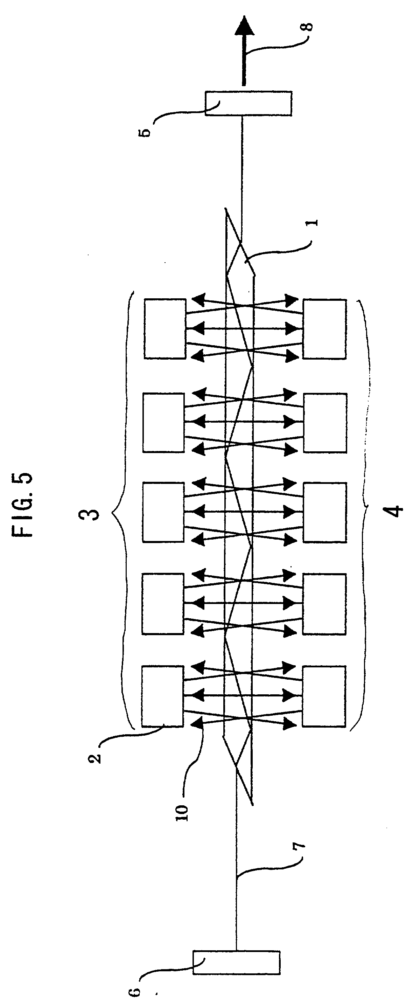

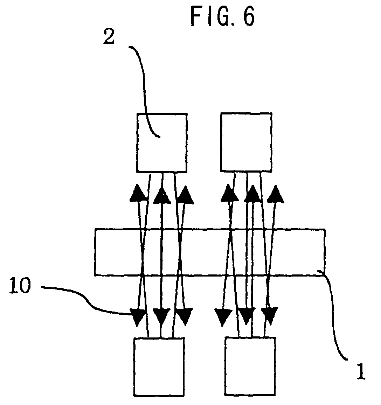

FIGS. 5 and 6 are diagrams showing the arrangement of a principal part of a conventional semiconductor laser-excited, slab-type solid-state laser oscillating device of side-excitation type, wherein FIG. 5 is a section taken along a plane parallel to an optical axis of a laser beam, and FIG. 6 is a section taken along a plane perpendicular to the optical axis.

Referring to FIGS. 5 and 6, reference numeral 1 denotes a laser oscillation medium comprising a YAG laser crystal with a thin slab shape, which is arranged between an output mirror 5 and a rear mirror 6 in a manner such that it is surrounded by a cooling medium, such as pure water, circulating through a transparent cooling tube (not shown).

Semiconductor lasers (a plurality of stacks each provided with a number of LD devices: this applies to the following description) 2, which are used as excitation source, include a group 3 (first group) and a group 4 (second group) of semiconductor laser stacks arranged on both sides of the laser oscillation medium 1.

Excitation light 10 emitted from the semiconductor lasers 2 of the groups 3 and 4 (more exactly, from the emitting surfaces of the individual LD devices) falls upon the laser oscillation medium 1 and most part of the light is absorbed by the oscillation medium 1 and used for laser excitation (optical pumping). In order to keep the efficiency of the optical resonator high, the opposite end faces of the laser oscillation medium 1 are cut obliquely with respect to the thickness direction at an angle to satisfy Brewster's condition. In accordance with this condition, the optical axis 7 of the laser beam forms a zigzag path repeating total reflection within the laser oscillation medium 1. Reference numeral 8 denotes a laser beam which is outputted from the output mirror 5 as transmitted light.

In order to increase the output of such a semiconductor laser-excited, slab-type solid-state laser oscillating device, it is essential to increase the number of semiconductor lasers 2 used as the excitation source. Compared with the rod-shaped medium, the slab-type solid-state laser oscillation medium 1 having the shape of a thin plate is advantageous in that more semiconductor lasers 2 can be arranged around the oscillation medium.

However, in the conventional semiconductor laser-excited, slab-type solid-state laser oscillating device described above, a considerable part of the light emitted from one group 3 (or 4) of semiconductor lasers 2 and transmitted through the solid-state laser oscillation medium 1 (not absorbed by the laser oscillation medium 1) impinges upon the emitting surfaces of the other group 4 (or 3) of semiconductor lasers 2.

Therefore, a problem arises in that the semiconductor lasers on which the transmitted light impinges are deteriorated in their characteristics. Also, the light which has once transmitted through the laser oscillation medium 1 is nothing but a loss because it does not make any contribution to the laser oscillation. To solve these problems, the thickness of the slab-type solid-state laser oscillation medium 1 may be increased to increase the absorptance for the excitation light and thereby reduce the amount of transmitted light.

If this measure is adopted, however, the efficiency of the laser oscillation medium lowers. Especially in cases where the input electric power is increased to obtain an output of 1 kW or higher, the temperature of the slab-type solid-state laser oscillation medium 1 rises significantly, increasing the possibility of the medium 1 itself being broken due to thermal expansion.

Instead of increasing the thickness of the slab-type solid-state laser oscillation medium 1, two slab-type solid-state laser oscillation mediums may be arranged side by side, thereby to enhance the laser beam absorbing efficiency of the slab-type solid-state laser oscillation mediums without lowering the oscillation medium cooling efficiency. Such arrangement, if adopted, leads to complication of the device and makes it difficult to adjust the optical axis.

Still another measure proposed is to remove the semiconductor laser group 3 (or 4) on one side of the slab-type solid-state laser oscillation medium 1 and arrange a reflector with a high-reflectivity surface instead. With this arrangement, the laser beam once transmitted through the laser oscillation medium can be made to again fall upon the laser oscillation medium, so that the excitation light absorbing efficiency of the solid-state laser oscillation medium can be enhanced. However, semiconductor lasers that can be arranged must unavoidably be reduced in number, and as a result, there is a limit to increase in the output.

An object of the present invention is to provide a semiconductor laser-excited, slab-type solid-state laser oscillating device which has high degree of utilization of excitation light and is capable of preventing deterioration in the characteristics of LD devices used as excitation source.

The present invention is applied to a slab-type solid-state laser oscillating device in which a slab-type solid-state laser oscillation medium of a thin plate is disposed in an optical resonator and a plurality of semiconductor lasers are arranged alongside the laser oscillation medium as an excitation light source to obtain a laser output.

The semiconductor lasers are arranged on both sides of the slab-type solid-state laser oscillation medium, and the individual semiconductor lasers are arranged such that excitation light emitted from a first group of semiconductor lasers by one side of the laser oscillation medium does not impinge on any emitting surfaces of a second group of semiconductor lasers by the other side of the laser oscillation medium. The semiconductor lasers may be arranged such that the respective semiconductor lasers in the first group alternate with the respective semiconductor lasers in the second group with the laser oscillation medium therebetween.

Also, reflectors may be used to reflect part of the excitation light emitted from each group of semiconductor lasers and transmitted through the slab-type solid-state laser oscillation medium toward the laser oscillation medium, insofar as the above positioning condition is fulfilled. Further, each of the first and second groups of semiconductor lasers may be divided into sub groups and each sub group of semiconductor lasers may be arranged so as to emit excitation light towards a common reflector.

In a typical embodiment of the invention, the device is constituted such that the optical axis of laser beam forms a zigzag path repeating total reflection within the slab-type solid-state laser oscillation medium.

The practice of the present invention, enables semiconductor lasers to be prevented from being deteriorated in their characteristics by a phenomenon that the excitation light emitted from semiconductor lasers impinges on other semiconductor lasers. Since part of the excitation light transmitted through the slab-type solid-state laser oscillation medium is absorbed by the solid-state laser oscillation medium, the excitation light absorbing efficiency of the slab-type solid-state laser oscillation medium is high, and as a consequence, the laser conversion efficiency increases. Also, it is possible to arrange semiconductor lasers on both sides of the slab-type solid-state laser oscillation medium, and therefore, compared with a conventional device in which semiconductor lasers are arranged on only one side of the laser oscillation medium, a larger number of semiconductor lasers can be used, so that the output can be increased.
FIG. 1 is a sectional view taken along a plane parallel to the optical axis of a laser beam, illustrating a principal part of a semiconductor laser-excited, slab-type solid-state laser oscillating device according to one embodiment of the present invention;
FIG. 2 is a sectional view taken along a plane perpendicular to the optical axis of a laser beam, illustrating the principal part of the solid-state laser oscillating device shown in FIG. 1;
FIG. 3 is a sectional view taken along a plane perpendicular to the optical axis of a laser beam, illustrating a principal part of a laser oscillating device according to another embodiment of the present invention;
FIG. 4 is a sectional view taken along a plane perpendicular to the optical axis of a laser beam, illustrating a principal part of a laser oscillating device according to still another embodiment of the present invention;
FIG. 5 is a sectional view taken along a plane parallel to the optical axis of a laser beam, illustrating a principal part of a conventional semiconductor laser-excited, slab-type solid-state laser oscillating device of side excitation type; and
FIG. 6 is a sectional view taken along a plane perpendicular to the optical axis of a laser beam, illustrating the principal part of the conventional laser oscillating device shown in FIG. 5.

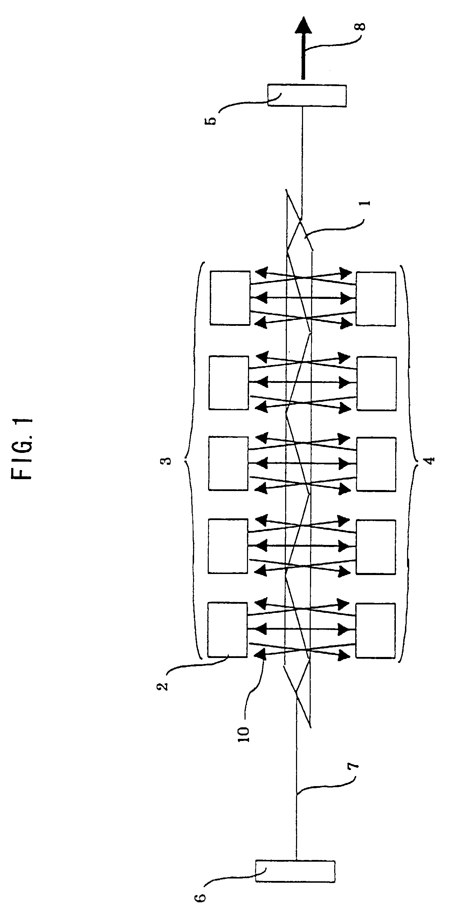

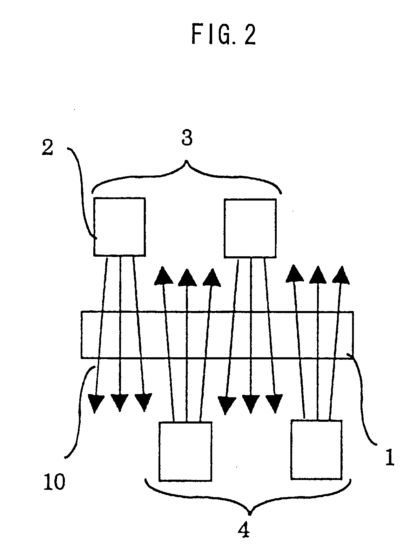

FIGS. 1 and 2 illustrate the arrangement of a principal part of a semiconductor laser-excited, slab-type solid-state laser oscillating device according to an embodiment of the present invention, wherein FIG. 1 shows a section taken along a plane parallel to the optical axis of a laser beam, and FIG. 2 shows a section taken along a plane perpendicular to the optical axis of the laser beam. For elements appearing in both FIGS. 1 and 2, identical reference numerals are used.

Referring to FIGS. 1 and 2, a laser oscillation medium 1 comprises a YAG laser crystal having a thin slab shape and is arranged between an output mirror 5 and a rear mirror 6 and also surrounded by a cooling medium, such as pure water, which is circulating in a transparent cooling tube (not shown).

Semiconductor lasers 2 for use as the excitation source are arranged on both sides of the laser oscillation medium 1 to form a group 3 (first group) and a group 4 (second group) of semiconductor laser stacks each comprising a number of LD devices. However, the groups 3 and 4 of semiconductor lasers are arranged in a manner different from that of the conventional device (FIGS. 5 and 6), and this arrangement reflects a feature of the present invention.

Specifically, as seen from the depiction of FIG. 2, the first and second groups 3 and 4 of semiconductor lasers are arranged so as to be alternated or shifted with respect to the direction along the longer sides of a flat rectangular section of the laser oscillation medium 1. In the illustrated example, the second group 4 of semiconductor lasers is divided into two rows between which a corresponding one of two rows of the first group 3 is situated.

Excitation light 10 emitted from the semiconductor lasers 2 of the individual groups 3 and 4 (emitted from the emitting surfaces of the individual LD devices) impinges on the laser oscillation medium 1. Most part of the incident light is absorbed in the laser oscillation medium 1 and used for laser excitation (optical pumping), but part of the incident light transmits through the laser oscillation medium 1.

Unlike the conventional device (cf. FIGS. 5 and 6), since the first and second groups 3 and 4 of semiconductor lasers are positioned in the aforementioned relationship, light transmitted through the laser oscillation medium 1 is prevented from impinging on other semiconductor lasers 2 (emitting surfaces of the LD devices). This serves to prevent deterioration in the characteristics of each semiconductor laser 2.

To keep the efficiency of the optical resonator high, the opposite end faces of the laser oscillation medium 1 are preferably cut obliquely with respect to the thickness direction at an angle to satisfy Brewster's condition, as in the conventional device. In accordance with this condition, the optical axis 7 of the laser beam forms a zigzag path repeating total reflection within the laser oscillation medium 1. Reference numeral 8 denotes a laser beam which is outputted from the output mirror 5.

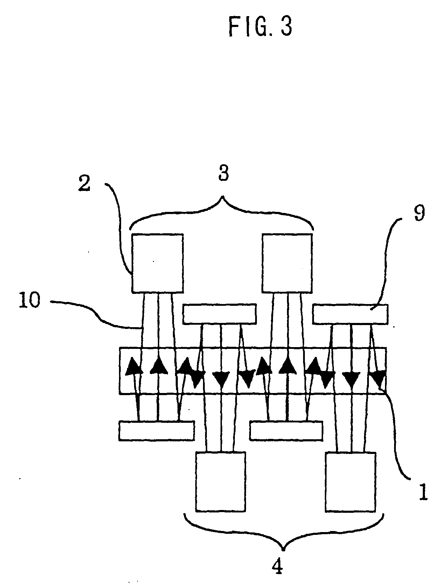

The transmitted light from the laser oscillation medium 1 in the above embodiment may be reflected and reused. Such embodiment is shown in the sectional view of FIG. 3 similar to FIG. 2.

As shown in FIG. 3, in this embodiment, a reflector 9 having a high-reflectivity surface is arranged to confront a corresponding semiconductor laser stack 2 with the laser oscillation medium 1 therebetween. With this arrangement, the transmitted light is prevented from being wasted, and thus the output can be correspondingly increased. The orientation of each high-reflectivity surface 9 is selected such that the reflected light therefrom does not impinge on the other semiconductor lasers 2 after transmitting again through the laser oscillation medium 1.

The material of the high-reflectivity surface 9 is preferably selected taking account of reflectivity with respect to excitation light and chemical stability (corrosion resistance). Preferred materials include those containing, as a major component, gold (Au), silver (Ag), aluminum (Al) or a dielectric having high reflectivity. Among these, a film containing gold (Au) as its main component is excellent in both reflecting properties and corrosion resistance. A layer constituted by such films can be formed on a suitable base member by a film formation technique known in the art, such as vacuum deposition.

In the present invention, the basic requirement is that two groups of semiconductor lasers should be arranged such that excitation light emitted from one group of semiconductor lasers arranged on one side of a slab-type solid-state laser oscillation medium does not impinge on any emitting surfaces of the other group of semiconductor lasers arranged on the other side of the laser oscillation medium, and thus the manner of arranging the semiconductor lasers (individual stacks of the semiconductor laser groups) is not limited to the above-described example. The semiconductor lasers may not necessarily be arranged in line, and also the direction of emission of a laser beam from each semiconductor laser may not necessarily be at right angles to the lengthwise direction of the slab-type solid-state laser oscillation medium.

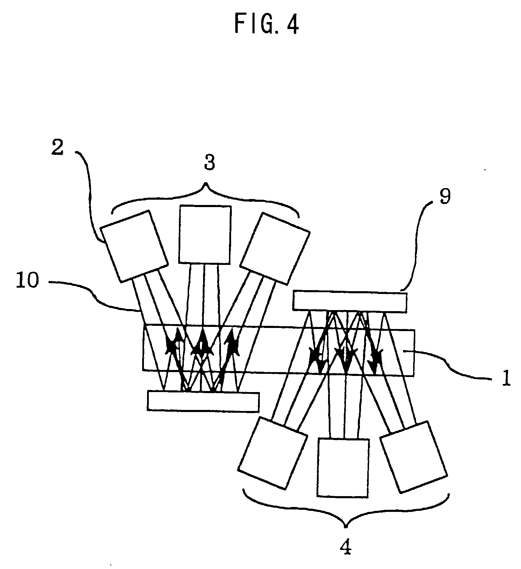

Such modification (embodiment) is shown in the sectional view of FIG. 4 similar to FIGS. 2 and 3. In the illustrated example, three stacks of semiconductor lasers in each of the first group 3 and the second group 4 of semiconductor lasers are gathered as one set and one common reflector 9 having a high-reflectivity surface is provided for each set of semiconductor lasers. The respective sets of stacks are arranged so as to be alternated or shifted with respect to the direction along the longer sides of the flat rectangular section of the laser oscillation medium 1. In general, each of the first and second groups of semiconductor lasers is divided into sub groups each including a plurality of semiconductor laser stacks, and a common reflector having a high-reflectivity surface is provided for each sub group.

Excitation light 10 emitted from each set of the semiconductor lasers 2 (emitted from the emitting surfaces of the respective LD devices) impinges on the laser oscillation medium 1. Most part of the incident light is absorbed in the laser oscillation medium 1 and used for laser excitation (optical pumping), but part of the incident light transmits through the laser oscillation medium 1.

The transmitted light impinges on and is reflected by the corresponding high-reflectivity surface 9, and the reflected light impinges on the laser oscillation medium 1 again and is used for laser excitation. Part of the reflected light transmits through the laser oscillation medium 1 again and impinges on the same semiconductor laser (stack) 2 from which the excitation light has been emitted or the other adjacent (right-hand or left-hand) semiconductor lasers 2 belonging to the same set. However, such light is considerably low in intensity because it has transmitted through the laser oscillation medium 1 twice, and deterioration in the characteristics of the semiconductor lasers 2 practically does not arise.

In the arrangement shown in FIG. 4, if the traveling direction of light emitted from the semiconductor laser stacks of the individual sets is inclined with respect to the paper surface, then it is possible to prevent light transmitted through the laser oscillation medium 1 twice from impinging on the semiconductor lasers. Also, by shifting the three semiconductor laser stacks of each set to different positions along a direction perpendicular to the paper surface of FIG. 4, it is possible to prevent light transmitted through the laser oscillation medium 1 twice from impinging on the semiconductor lasers.

According to the present invention, it is possible to suppress the phenomenon that the excitation light which is emitted from semiconductor lasers as excitation light source impinges on other semiconductor lasers to deteriorate characteristics of the other semiconductor lasers. Also, since part of the excitation light transmitted through the slab-type solid-state laser oscillation medium impinges on the laser oscillation medium to be absorbed thereby, the excitation light absorbing efficiency of the slab-type solid-state laser oscillation medium increases, and as a result, the laser conversion efficiency is enhanced.

Semiconductor lasers can be arranged on both sides of the slab-type solid-state laser oscillation medium, and accordingly, compared with the conventional device in which semiconductor lasers are arranged on only one side of the laser oscillation medium, a larger number of semiconductor lasers can be arranged, making it easy to increase the output also for this reason.

Further, the device needs not to be highly complicated, and the difficulty of optical axis adjustment does not arise unlike the case where slab-type solid-state laser oscillation mediums are arranged side by side.

## Claims

1. A slab-type solid-state laser oscillating device comprising:
a slab-type solid-state laser oscillation medium of a thin plate disposed in an optical resonator;
a first group of semiconductor lasers arranged by one side of said laser oscillation medium for excitation thereof;
a second group of semiconductor lasers arranged by the other side of said laser oscillation medium for excitation thereof;
wherein said first and second groups of semiconductor lasers are arranged such that excitation light emitted from one of said first and second groups of semiconductor lasers avoids impinging on any emitting surfaces of the other of said first and second groups of semiconductor lasers.

2. A slab-type solid-state laser oscillating device according to claim 1, wherein said first and second groups of semiconductor lasers are arranged such that respective ones of said first group of semiconductor lasers alternate with respective ones of said second group of semiconductor lasers with said laser oscillation medium therebetween.

3. A slab-type solid-state laser oscillating device according to claim 1, further comprising reflectors for reflecting part of light emitted from said first and second group of semiconductor lasers and penetrated through said laser oscillation medium towards said laser oscillation medium.

4. A slab-type solid-state laser oscillating device according to claim 3, wherein each of said first and second groups of semiconductor lasers are divided into sub groups and each sub group of semiconductor lasers are arranged so as to emit excitation light towards a common reflector.

5. A slab-type solid-state laser oscillating device according to any one of claims 1 to 4, wherein a zigzag optical path of laser bean is formed by repeating total reflection in said laser oscillation medium.
